(19) Europäisches Patentamt
European Patent Office
Office européen des brevets

(11) EP 2 284 307 A1

(12) **EUROPEAN PATENT APPLICATION**
published in accordance with Art. 153(4) EPC

(43) Date of publication:
16.02.2011 Bulletin 2011/07

(51) Int Cl.:
*D03D 15/00* (2006.01)     *A41D 13/00* (2006.01)
*D03D 11/00* (2006.01)

(21) Application number: 08869986.3

(22) Date of filing: 25.12.2008

(86) International application number:
PCT/JP2008/073597

(87) International publication number:
WO 2009/087913 (16.07.2009 Gazette 2009/29)

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 11.01.2008 JP 2008004052

(71) Applicant: Toray Industries, Inc.
Tokyo, 103-8666 (JP)

(72) Inventors:
• FUJITA, Kazuya
Otsu-shi
Shiga 520-2141 (JP)
• AKIZUKI, Kenji
Osaka-shi
Osaka 530-8222 (JP)
• YASUDA, Takaji
Hakui-shi
Ishikawa 925-0623 (JP)

(74) Representative: Webster, Jeremy Mark et al
Mewburn Ellis LLP
33 Gutter Lane
GB-London EC2V 8AS (GB)

(54) **FABRIC, AND CLOTHES USING THE SAME**

(57) To provide a fabric exhibiting excellent surface conductive performance in the whole direction, and to provide conductive clothes showing surface electroconductivety overall in clothes by sewing the fabric, a fabric is made so as conductive yarns are inserted each in the warp direction and the weft direction and disposed in a lattice at intervals, wherein at least either one of conductive yarns in the warp direction or the weft direction is inserted as double weave to be a float yarn, on the surface that the conductive yarn becomes a float yarn in the double weave, a ratio of the conductive yarn inserted as the double weave not covered by the orthogonal nonconductive yarn but exposed (exposing conductive yarn ratio in double weave part) is not less than 50% in arithmetic average, and a ratio that the conductive yarns in the warp direction and the weft direction intersect and contact each other (conductive yarn intersect contact ratio) is not less than 40% in arithmetic average.

Fig.1

EP 2 284 307 A1

**Description**

TECHNICAL FIELD

The present invention relates to a fabric having excellent surface electroconductive and antistatic properties, and to clothes that the fabric is sewn. Further specifically it relates to a fabric having the surface electroconductive property over the whole region across the seam of clothes and being excellent in electrostatic diffuseness, and to clothes using the same.

BACKGROUND ART

Conductive clothes have been conventionally used for preventing electrostatic attraction of dust in a workshop or clean room handling parts and chemicals to which static electricity is an obstacle. In the conductive clothes, conductive yarns are woven into the clothes for taking measures against static electricity. For example, electrostatic attraction of dust is prevented by weaving conductive yarns into the clothes at a certain interval in a stripe or lattice and neutralizing static electricity by corona discharge. In general, the conductive yarn is often colored black or gray; thus, from an aesthetic viewpoint, one that the conductive yarn is exposed a lot in the reverse side of clothes is described in Patent document 1. However, in this method, surface electric resistance in the outer surface of clothes is high, and efficiency of diffusing static electricity generated inside the clothes into the outside of the clothes becomes bad.

In recent years, as demand characteristics of electrostatic control, in IEC (International Electrotechnical Commission) 61340-5-1, 5-2, surface electric resistance of conductive clothes has been regulated, and surface electroconductive property over the overall clothes is required. In order to enhance the electroconductive property in the whole region of clothes, the electroconductive property across seam is required, needless to say the electroconductive property in the oblique direction of cloth. In this case, it becomes necessary to weave conductive yarns in a lattice to make contacts in the different directions, and to bring conductive yarns into contact with each other in the sewn part of clothing fabric. In the case of forming conductive yarn as multiple wound yarn, twisted yarn or commingled yarn with nonconductive yarn, when nonconductive yarn is disposed on the surface of conductive yarn, electroconductive property with conductive yarn of the other direction is not formed. That means, to enhance the electroconductive property, a blending ratio of conductive yarn must be increased, and an increase in cost accompanied with this cannot be avoided.

Patent document 2 describes that electroconductive property with the conductive yarn of the other direction is improved by covering nonconductive yarn with conductive yarn, but there remains a problem on processing cost of covering yarn as well.

Patent document 1: Japanese Unexamined Patent Publication No. 2001-73207
Patent document 2: Japanese Patent No. 3880743

DISCLOSURE OF THE INVENTION

PROBLEMS TO BE SOLVED BY THE INVENTION

The object of the present invention is, in the light of present situations of the above-described conventional art, to provide a fabric exhibiting excellent surface conductive performance in the whole direction, and to provide conductive clothes showing surface electroconductivety overall in clothes and capable of diffusing static electricity rapidly into air, by sewing the fabric,.

MEANS TO SOLVE THE PROBLEMS

The present invention has the following constitution to solve the problems described above.

(1) A fabric, where conductive yarns are inserted each in the warp direction and the weft direction and disposed in a lattice at intervals, wherein at least either one of conductive yarns in the warp direction or the weft direction is inserted as double weave to be a float yarn, on the surface that the conductive yarn becomes a float yarn in the double weave, a ratio of the conductive yarn inserted as the double weave not covered by the orthogonal nonconductive yarn but exposed (exposing conductive yarn ratio in double weave part) is not less than 50% in arithmetic average, and a ratio that the conductive yarns in the warp direction and the weft direction intersect and contact each other (conductive yarn intersect contact ratio) is not less than 40% in arithmetic average.
(2) The fabric described in (1), wherein base weave comprises a nonconductive yarn, the total yarn finess D1 of conductive yarn inserted as the double weave and the total yarn finess D2 of nonconductive yarn forming the base weave in the same direction satisfy the following relationship:

D1 < D2 [D1: the total yarn finess of conductive yarn inserted as the double weave (dtex), D2: the total yarn finess of nonconductive yarn forming the base weave in the same direction as the conductive yarn inserted as the double weave (dtex)]

(3) The fabric described in (1) or (2), wherein pitch of conductive yarn disposed in a lattice at intervals is in a range of 1 to 20 mm both in the warp direction and the weft direction.

(4) The fabric described in any one of (1) to (3), wherein surface electric resistance (R) between two points separated by 30 cm across at least one seam, when measured by a method described in IEC (International Electrotechnical Commission) 61340-5-1, 5-2 (under the environment of 23°C and 25% RH), satisfies the following formula:

$$R \leq 1.0 \times 10^{12} \; \Omega$$

(5) The fabric described in any one of (1) to (4), wherein a monofilament composing the conductive yarn has a circular cross section or an irregular cross section having a convex part, and conductive component is exposed in at least 3 places in the circumferential direction of the outer circumferential surface and continuously in the longitudinal direction.

(6) Clothes, using the fabric described in any one of (1) to (5), wherein the surface that the conductive yarn is inserted as the double weave to be a float yarn is the obverse side of clothes.

EFFECT OF THE INVENTION

According to the present invention, it is possible to obtain a fabric exhibiting excellent surface conductive performance in the whole direction, and to obtain conductive clothes with high surface electroconductive property in clothes overall.

BRIEF DESCRIPTION OF THE DRAWINGS

Fig. 1 is a diagram of textile weave of fabric produced in Examples (however, the number of base yarns between conductive yarns does not correspond for convenience.).

Fig. 2 is a cross sectional view of one example of surface exposing type conductive yarn in the present invention.

Fig. 3 is one example of piling methods of fabrics in stitching two pieces of fabrics to measure surface electric resistance.

Fig. 4 is a schematic diagram of measuring method of surface electric resistance across seam.

DESCRIPTION OF NUMBER AND SYMBOL

1: Conductive yarn incorporated in double weave

2: Conductive yarn inserted by dobby

3: Nonconductive component base polymer

4: Polymer part that matrix including carbon is exposed at part of surface

5: Stitch by lock stitch sewing machine

6: Overlapped part of cloth

7: Measuring probe (linear distance between probes: 30 cm)

8: Flat felled seam part

9: Surface electric resistance detector

BEST MODE FOR CARRYING OUT THE INVENTION

The fabric of the present invention may be composed of only conductive yarn just for exhibiting electrical conductivity, but in order to exhibit electrical conductivity inexpensively, it is preferably composed of nonconductive yarn and conductive yarn.

As the nonconductive yarn used in the fabric of the present invention, there are preferably used a synthetic yarn and natural yarn, namely, a filament yarn of polyester, nylon etc., spun yarn, a blended yarn of staple of polyester, nylon etc. with rayon staple, cotton yarn etc., further, an antistatic polyester filament yarn or antistatic nylon yarn that a hydrophilic polymer is blended or an hydrophilic group is introduced, and the like.

The conductive yarn used in the fabric of the present invention may be a yarn containing a conductive component; for example, it is a metal-covered yarn, a yarn composed of conductive yarn that a nonconductive base polymer of polyester or polyamide to be fiber base, and a conductive fine particle of carbon or metal and metal compound etc., or a white-color conductive ceramic fine particle etc., are contained by composite spinning; or a yarn containing these conductive yarns. In the present invention, a conductive yarn with carbon as a conductive component is preferable from the points of durability under acid or alkali environment and washing durability.

As a method for compounding a conductive component in yarn, there are methods for yarn making, such as core-in-sheath, covering and partially surface exposing types. In the case of being used as dust-proof clothes for clean rooms of high cleanness, a covering type conductive yarn that core fibers were covered by a conductive component, and a partially surface exposing type yarn that a conductive component was exposed partially at the surface may lead to dust generation from the conductive component and contamination of workshop; thus, core-in-sheath type yarn that a conductive component was included inside is preferably used. On the other hand, in a workshop where that high cleanness is not required, by using the above-described partially surface exposing type yarn, it is possible to obtain cloth of lower surface electric resistance.

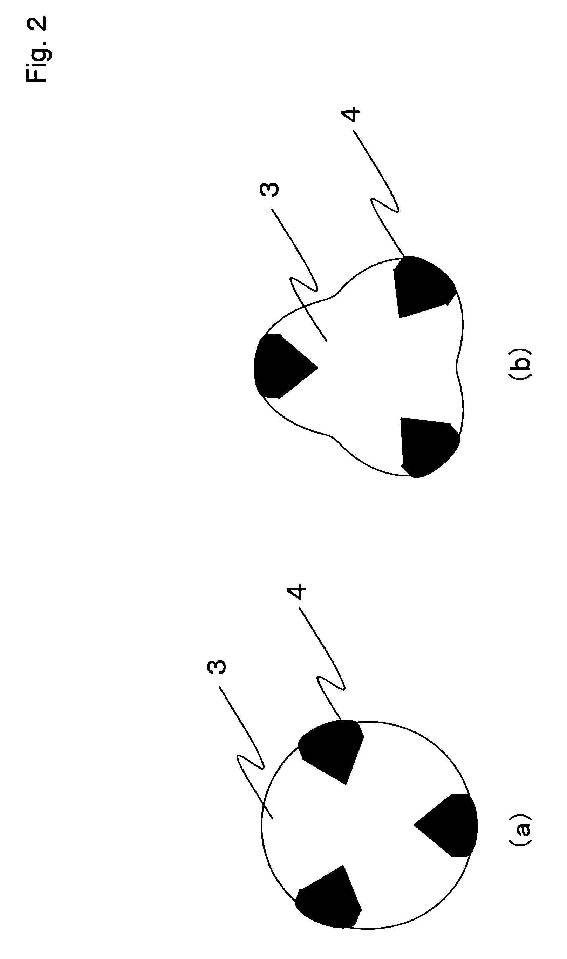

The partially surface exposing type yarn means a yarn where a conductive component is exposed partially in the circumferential direction at the cross section of single fiber composing the yarn and the conductive component exposed is exposed continuously in the longitudinal direction of single fiber. Above all, from the point of lowering surface electric resistance, preferable is a conductive yarn composed of fibers with a circular cross section shown in Fig. 2(a) or with an irregular cross section having a convex part shown in Fig. 2(b), and on the outer circumferential surface of the single fiber, a conductive component is exposed in at least 3 places in the circumferential direction and continuously in the longitudinal direction. Additionally, in the case of an irregular cross-section fiber, it is preferable that a conductive component is exposed at the convex part in the circumferential direction.

Further, in the present invention, a conductive yarn can be also formed by doubling, twisting or commingling a yarn containing these conductive components and a synthetic yarn or natural yarn.

As a configuration of conductive yarn, staple can be used; in this case, since electric resistance between single fiber increases, not blending with nonconductive yarn, but the conductive yarn alone is preferably used. More preferably, a filament is used as the conductive yarn, thereby it becomes possible to suppress the increase of electric resistance between single fibers to the minimum.

As the conductive yarn, for example, one with a single fiber finess of 1 to 10 dtex and the total yarn finess of 10 to 150 dtex is used. The electric resistance of conductive yarn is preferably $10^9$ $\Omega$/cm or less, in particular, $10^8$ $\Omega$/cm or less. Such electric resistance can be easily attained by exposing a conductive component on the part of surface. Here, electric resistance of conductive yarn means specific resistance that under the environment of 20°C and 30% RH, electric voltage is loaded on both ends filament-cut to 10 cm (500 V set in this case).

The fabric of the present invention is a fabric that the above-described conductive yarns are inserted in the warp direction and the weft direction to be disposed in a lattice at intervals. The conductive yarns are incorporated in one of the warp direction and the weft direction or in both as double weave to be disposed on (or beneath at the reverse side of) base yarn (ordinarily nonconductive yarn) composing the base weave of the same direction. Namely, in the double weave, the conductive yarn is exposed on the fabric as a float yarn to be a protruded shape from the base weave. In this way, the area of conductive yarn exposed on the fabric surface is increased, and contact with conductive yarn in other direction is improved, so that the neutralization and diffusion of static electricity becomes easy. Here, when the conductive yarn is not disposed on (or beneath) the nonconductive yarn (base yarn) of the same direction, but disposed between nonconductive yarns of the same direction, the conductive yarn is buried in the base yarn (nonconductive yarn) and contact with orthogonal conductive yarn less.
Thus, the neutralization and diffusion of static electricity becomes insufficient.

In the present invention, as described above, conductive yarn is exposed on the fabric surface. For the conductive yarn incorporated in the fabric as double weave, it is preferable that an exposing conductive yarn ratio in double weave part is not less than 50% in arithmetic average, and further preferably not less than 70%.

Herein, an exposing conductive yarn ratio in double weave part is a ratio of the area of, when the surface that conductive yarn line A is inserted in double weave to be float yarn is viewed from the upper surface, the part that the conductive yarn line A being float yarn is not covered by the orthogonal nonconductive yarn line but exposed relative to the total area of conductive yarn line A inserted as double weave. Here, "the total area of conductive yarn line A inserted as double weave" is a product of width of a conductive yarn line A and length of the conductive yarn line A, and that includes the part covered by the orthogonal other yarn line and not exposed on the surface in said area. In "the part not covered by the orthogonal nonconductive yarn but exposed" of conductive yarn line A, the part covered by the orthogonal conductive yarn line is included; on the other hand, the part not becoming float yarn although it is the part of the above-described conductive yarn line A, namely, the part not disposed on the nonconductive yarn being base weave but disposed beside the nonconductive yarn by rolling down is not included.

Additionally, in the present invention, an exposing conductive yarn ratio per 2.54 cm (one inch) in the longitudinal direction of conductive yarn inserted in double weave is calculated. From the exposing conductive yarn ratios of 5 places randomly chosen, an arithmetic average is calculated. The arithmetic average herein is obtained by summing all values of data and dividing which by the number of data (n number). Therefore, the values of the exposing conductive yarn ratios at 5 places are all summed, and the value summed up is divided by 5.

In the case that conductive yarns are incorporated in double weave in both the warp direction and the weft direction, it becomes possible to be a shape that conductive yarns are exposed on either surface of front-back sides of fabric. In this case, the exposing conductive yarn ratio in the double weave part may be calculated each for the obverse face and reverse face by the foregoing method, and in the present invention, it is good enough that in either face, the exposing conductive yarn ratio is not less than 50% in arithmetic average.

As means to achieve an exposing conductive yarn ratio of not less than 50% in arithmetic average, it is preferable to adjust a total finess ratio of nonconductive yarn and conductive yarn. Namely, in order to dispose the conductive yarn completely on the nonconductive yarn in the double weave part (or beneath in the reverse side), it is preferable that the total yarn finess of conductive yarn D1 is less than the total yarn finess of nonconductive yarn forming the base weave in the same direction D2 (D1 < D2).

When the total yarn finess of conductive yarn to be inserted in double weave is set to be smaller than that of nonconductive yarn being base yarn, the conductive yarn is easy to take a position being disposed on the base yarn (nonconductive yarn), and the delivery and receipt of electric charges is efficiently done at the intersection of the conductive yarns to be able to improve electroconductive property. In particular, a force pushing down by the orthogonal other yarns is operated on the conductive yarn in fabric, but by satisfying D1 < D2, the conductive yarn inserted in double weave tends to be disposed on the base yarn. Hence, even when the total yarn finess of conductive yarn or the number of filaments is reduced, the surface electric resistance does not deteriorate extremely, and it becomes possible to reduce weaving costs by adopting the finer conductive yarn.

Even when D1 ≥ D2, it does not bother for performance of conductive fabric, but the cost of conductive yarn becomes more, which will not be a preferable mode because conductive performance of fabric becomes saturated. In the case that the total yarn finess of conductive yarn is large, when it is inserted in double weave, disposing it on base yarn becomes difficult; for example, there arise problems that the conductive yarn is disposed partially rolling down from above the base yarn, or friction at the conductive yarn inserting part in fabric becomes strong.

Additionally, making conductive yarn finer sometimes leads to yield loss by yarn break in weaving; thus, it is preferable to adopt a commingling or double-twisting conductive yarn with nonconductive yarn as the conductive yarn. Thereby, it is possible to adjust yarn strength and stabilize weaving performance. The finess ratio of conductive yarn in commingled yarn and double twisted yarn is preferably not less than 30%, more preferably not less than 50% for obtaining a good surface electric resistance.

By satisfying the above-described constituent, in the present invention, it is possible to obtain a conductive fabric where conductive yarns are more exposed on the fabric surface. Since conductive yarns are more exposed on the fabric surface, when the conductive fabric of the present invention is sewn, point contact of conductive yarns between clothing fabrics is easily done, and electroconductive property of sewn product overall can also be more enhanced.

In the present invention, the method of inserting an orthogonal conductive yarn in double weave is not particularly limited, but it is necessary for the ratio that conductive yarns in the warp direction and the weft direction in fabric intersect each other and make contacts (contact ratio of intersecting conductive yarns) to be not less than 40% in arithmetic average. When it is less than 40%, electroconductive property in the oblique direction of fabric becomes insufficient, and the electroconductive property between fabrics is not obtained sufficiently when they are sewn. On the other hand, when it is set to 40% or more, electroconductive property in the oblique direction is easily obtained, and a good electroconductive property between fabrics is obtained when they are sewn. The arithmetic average of the contact ratio of intersecting conductive yarns is preferably not less than 50%, and more preferably not less than 60%. For example, in the case that conductive yarns are inserted in weft double weave, when weft conductive yarns are disposed at intervals in a ratio of every odd-numbered yarn and warp conductive yarns are inserted in plain weave, the contact ratio of intersecting conductive yarns becomes 50%, obtaining a sufficient electroconductive property. On the other hand, when warp conductive yarns are inserted in skipping over one yarn in the obverse side, and 2 yarns in the reverse side, the contact ratio of intersecting conductive yarns becomes 33%, not obtaining a sufficient electroconductive property.

The contact ratio of intersecting conductive yarns defined herein is a ratio of the number of intersections that conductive yarns directly contact each other relative to the number of intersections of orthogonal conductive yarns. Namely, in the case that 5 conductive yarns are inserted each in the warp direction and in the weft direction, the ratio is calculated from the number of points where conductive yarns are intersecting and contacting in the total 25 points of conductive yarns intersecting; for example, when the number of points where conductive yarns are intersecting and contacting is 15, the contact ratio of intersecting conductive yarns is calculated to be 60%. Additionally, in the present invention, the arithmetic average at 5 places in total randomly chosen is 40% or more.

In the present invention, conductive yarns are not necessarily inserted in both the warp direction and the weft direction in double weave, and only one of them can be double weave. Namely, when conductive yarns are inserted either in the warp direction or the weft direction as double weave, because the other intersecting conductive yarn is made contact with a conductive yarn at the intersection, electroconductive property is ensured in the oblique direction as well.

As a method for inserting conductive yarns, other than double weave, a mode that conductive yarn is incorporated in base yarn has no problem. However, to satisfy the foregoing contact ratio of intersecting conductive yarns of not less than 60%, it is preferable to use twill or satin weave as fabric texture. In the case of plain weave, there arises no problem when weaving design is done for the conductive yarns inserted in double weave to be contacted with intersecting conductive yarns. As other method, change weave using a dobby loom is suitably used; when conductive yarns are disposed on the fabric surface and a design is done so as to satisfy a contact ratio of intersecting conductive yarns of not less than 60%, a good surface electric resistance can be obtained over the whole region of fabric.

In the present invention, regarding the number of constraints of conductive yarn in the double weave part by the orthogonal base yarn (nonconductive yarn), the fewer it is, the more lowering trend the surface electric resistance shows, but from the point of snagging performance, 6 yarns/2. 54 cm or more are preferable.

In the fabric of the present invention, as described above, conductive yarns are inserted and disposed each in the warp direction and the weft direction into a lattice at a certain interval for example. As the interval that the conductive yarns are inserted and disposed, the narrower it is, the better the conductive characteristic becomes. From the balance among conductive characteristic, drape, aesthetic property, appearance quality, cost and the like, it is preferably set for the pitch to be about 1 to 20 mm. When the pitch is less than 1 mm, the number of conductive yarns disposed becomes too large, it is not preferable from the points of drape, appearance and quality, and production cost of conductive yarn. When the pitch is more than 20 mm, it is necessary to have more seam allowance width not so as to increase surface electric resistance across seam, which is not preferable from the production cost of fabric. The pitch is more preferably about 1 to 10 mm.

According to the present invention as described above, since conductive yarns are exposed a lot on the surface composing fabric, point contact of conductive yarns between clothing fabrics sewn is easily done. Hence, according the fabric of the present invention, it becomes possible to satisfy IEC (International Electrotechnical Commission) 61340-5-1, 5-2 regulation being a demand characteristic for electrostatic control. Namely, under the temperature and humidity environment of 23°C and 25% RH, when surface electric resistance is measured at an applied voltage of 10 V or 100 V between two points separated by 30 cm in the oblique direction across at least one seam, it is possible to obtain fabric or clothes of not more than $1.0 \times 10^{12}$ $\Omega$ in the surface electric resistance. Here, the applied voltage is chosen according to the surface resistance of test piece, 10 V in the region of not more than $10^5$ $\Omega$, and 100 V in the region of not less than $10^6$ $\Omega$ are chosen.

In order to achieve this demand characteristic, when the fabric of the present invention is measured in the same way as IEC (International Electrotechnical Commission) 61340-5-1, 5-2 except for the change being not across seam, the surface electric resistance R of $R \leq 1.0 \times 10^{12}$ $\Omega$ is preferable. From the consideration of electrostatic diffusiveness, R in such measurement is further preferably not more than $1.0 \times 10^{10}$ $\Omega$, and $1.0 \times 10^6$ $\Omega$ to $1.0 \times 10^9$ $\Omega$ is most preferable. In such range, static electricity is diffused efficiently and quickly, spark electric shock from a charged body can be prevented, and it becomes possible to be used suitably as antistatic working clothes and dust-proof clothing applications.

In the case that the surface electric resistance between two points across seam is set to be not more than $1.0 \times 10^{12}$ $\Omega$, it is necessary to bring conductive yarns between cloths into contact in stitching. In this time, the more the number of contact points of conductive yarns in seam allowance increases, the more the surface electric resistance between cloths lowers; in the present invention where conductive yarns are disposed on base yarns using double weave, this is a very advantageous design upon thinking about stitching of conductive yarn contacts, and the surface electric resistance between two points across seam can easily satisfy the above-described range.

Regarding the fabric of the present invention described above, when the surface that conductive yarns are inserted in double weave to be float yarn is used in the obverse side of clothes, the clothes show excellent antistatic property even if static electricity is generated in any part, since fabric and clothes overall are stably electroconductive, corona discharge from conductive yarns occurs or earthing is positively done.

In the case that clothes are produced using the fabric of the present invention, stitch in sewing and seam are by no means restricted. Any stitch can be chosen, such as lock stitch, single chain stitch, double chain stitch and over lock. In regard to seam, it is possible to use seam suitable for various types of applications without limitation, such as rolled seam, flat felled seam, safety stitch and piping.

EXAMPLES

Next, the present invention is explained specifically by using Examples, but the present invention is by no means limited to these Examples. Additionally, various measuring methods in the present invention are as follows.

[Exposing conductive yarn ratio in double weave part]

The woven surface that conductive yarns are inserted as double weave to be float yarn is set to a state capable of observing 2.54 cm (one inch) in the longitudinal direction of the conductive yarn on the same screen using a microscope. By monitoring the conductive yarn part in the double weave part of this surface, in this screen, there is calculated a ratio of the area of the part not covered by the orthogonal nonconductive yarn line (conductive yarn exposed) to the whole area of conductive yarn of 2.54 cm (one inch) length (projected area). Here, the exposing conductive yarn ratios of the double weave part at 5 places in total randomly chosen are calculated, and the arithmetic average is adopted.

[Contact ratio of intersecting conductive yarns]

It is calculated from the number of points where conductive yarns are intersecting and contacting at the orthogonal intersections of 25 points in total composed of grids of 5 warps by 5 wefts of conductive yarns. Here, the arithmetic average is calculated from the exposing conductive yarn ratios at 5 places in total randomly chosen.

[Surface electric resistance of sewn part]

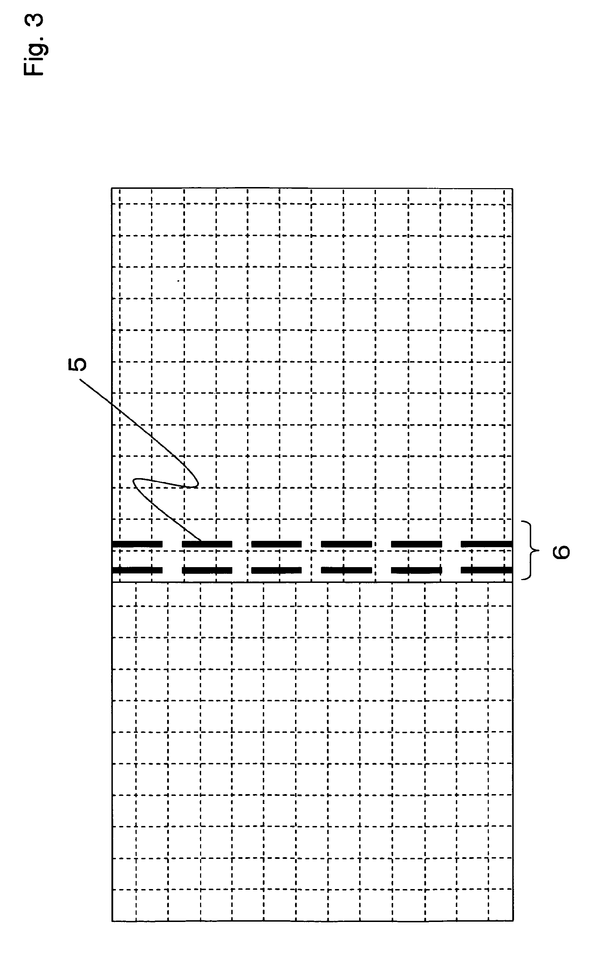

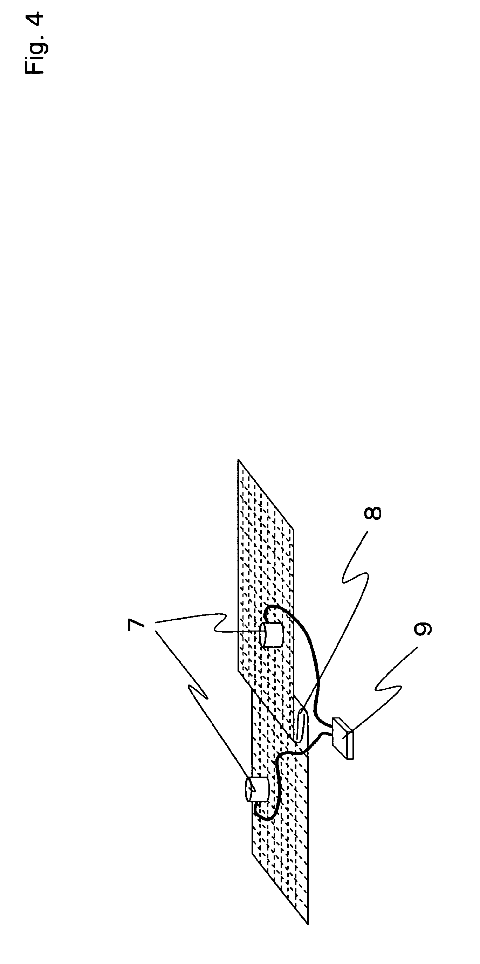

It was measured as bellow based on IEC (International Electrotechnical Commission) 61340-5-1, 5-2 regulation.
Clothes (blouson) are produced by carrying out a predetermined stitching by a lock stitch sewing machine. Thereafter, on the clothes, measuring probes of a surface electric resistance tester (Model 152AP-5P manufactured by Trek Japan Co. , Ltd.) are mounted at an interval of 30 cm across seam between them, and surface electric resistance is measured at an applied voltage of 100 V between two points. In this time, the two points are taken so that the coaxial conductive yarns of fabric specimen are not included. This is repeated at arbitrary three places, and the arithmetic average is calculated. Fig. 3 shows a schematic diagram after sewing, and Fig. 4 shows a schematic diagram for measuring surface electric resistance.

(Example 1)

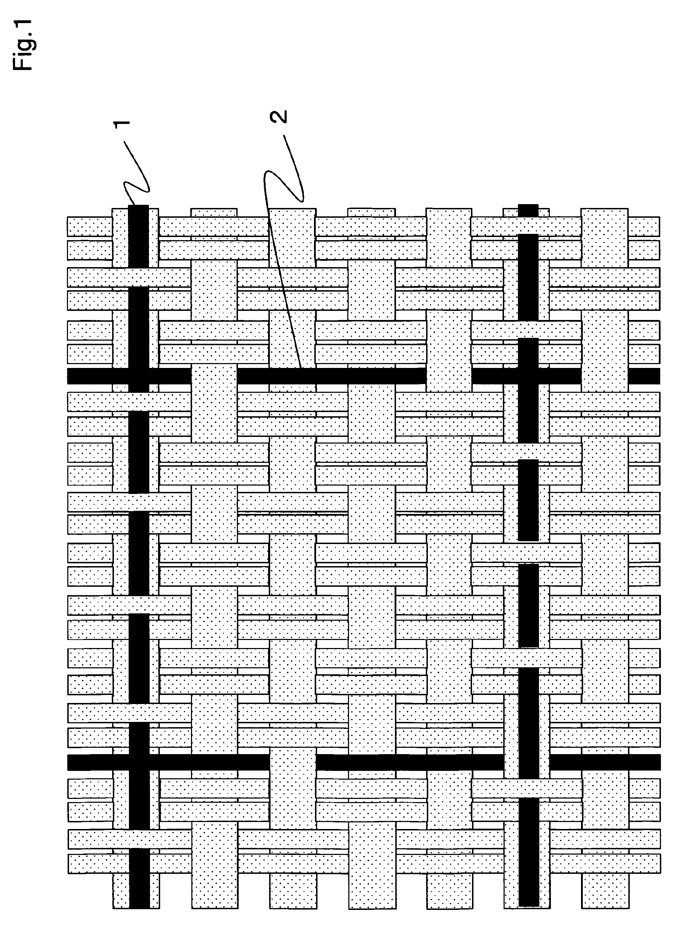

Using two-ply yarn of polyester melt adhesive fiber (84 decitex, 36 filaments) as a warp forming base weave and polyester false twist yarn (334 decitex, 96 filament) as a weft, and as a warp conductive yarn and a weft conductive yarn, a conductive yarn (84 decitex, 9 filaments) composed of surface exposing type yarn shown in Fig. 2 was used. The weave was made as shown in Fig. 1 in such manner that base weave was plain fabric (one-sided mat), and the warp conductive yarns were disposed by dobby weave in a ratio of every 24 yarns of base warps (pitch 5 mm) in skipping over 2 yarns in the obverse side, and one yarn in the reverse side. The weave was made as shown in Fig. 1 in such manner that the weft conductive yarns were inserted in a ratio of every 11 yarns of base wefts in weft double weave (pitch 5 mm), and disposed on the base weft (namely being float yarn) in skipping over 3 yarns in the obverse side, and one yarn in the reverse side. In this way, a gray fabric of 141 yarns/2.54 cm in warp density and 57 yarns/2.54 cm in weft density was produced. This gray fabric was refined, dyed and finished according to the common method to obtain a fabric of 153 yarns/2.54 cm in finish warp density and 62 yarns/2.54 cm in weft density. The fabric obtained was sewn by a sewing machine, and the surface electric resistance of sewn part was measured. Various data are shown in Table 1.

(Example 2)

It was carried out in the same conditions as Example 1 except that only conductive yarn was changed. Namely, as the conductive yarn, there was used a double twisted yarn (89 decitex, 18 filaments) of polyester false twist yarn (33 decitex, 12 filaments) with surface exposing type conductive yarn (56 decitex, 6 filaments). The fabric obtained was sewn by a sewing machine, and the surface electric resistance of sewn part was measured. Various data are shown in Table 1.

(Example 3)

Using two-ply yarn of polyester false twist yarn (84 decitex, 36 filaments) as a warp forming base weave and polyester false twist yarn (334 decitex, 96 filaments) as a weft, and as a warp conductive yarn and a weft conductive yarn, a surface exposing type conductive yarn (84 decitex, 9 filaments) was used. The weave was made in such manner that base weave was plain fabric (one-sided mat), and the warp conductive yarns were disposed by dobby weave in a ratio of every 32 yarns of base warps (pitch 5 mm) in skipping over 3 yarns in the obverse side, and one yarn in the reverse side. The weave was made in such manner that the weft conductive yarns were inserted in a ratio of every 15 yarns of base wefts in weft double weave (pitch 5 mm), and disposed on the base weft in skipping over 6 yarns in the obverse side, and 2 yarns in the reverse side. In this way, a gray fabric of 202 yarns/2.54 cm in warp density and 74 yarns/2.54 cm in weft density was produced. This gray fabric was refined, dyed and finished according to the common method to obtain a fabric of 208 yarns/2.54 cm in finish warp density and 85 yarns/2.54 cm in weft density. The fabric obtained was sewn by a sewing machine, and the surface electric resistance of sewn part was measured. Various data are shown in Table 1.

(Example 4)

Using two-ply yarn of polyester false twist yarn (84 decitex, 36 filaments) as a warp forming base weave and polyester false twist yarn (334 decitex, 96 filaments) as a weft, and as a warp conductive yarn and a weft conductive yarn, a surface exposing type conductive yarn (84 decitex, 9 filaments) was used. The weave was made in such manner that base weave was plain fabric (one-sided mat), and the warp conductive yarns were disposed by dobby weave in a ratio of every 32 yarns of base warps (pitch 5 mm) in skipping over 2 yarns in the obverse side, and 2 yarns in the reverse side. The weave was made in such manner that the weft conductive yarns were inserted in a ratio of every 15 yarns of base wefts in weft double weave (pitch 5 mm), and disposed on the base weft in skipping over 2 yarns in the obverse side, and 2 yarns in the reverse side. In this way, a gray fabric of 202 yarns/2.54 cm in warp density and 74 yarns/2.54 cm in weft density was produced. This gray fabric was refined, dyed and finished according to the common method to obtain a fabric of 208 yarns/2.54 cm in finish warp density and 85 yarns/2.54 cm in weft density. The fabric obtained was sewn by a sewing machine, and the surface electric resistance of sewn part was measured. Various data are shown in Table 1.

(Example 5)

Using two-ply yarn of polyester melt adhesive fiber (84 decitex, 36 filaments) as a warp forming base weave and polyester false twist yarn (84 decitex, 36 filament) as a weft, and as a warp conductive yarn and a weft conductive yarn, a conductive yarn (56 decitex, 6 filaments) composed of surface exposing type yarn was used. The weave was made in such manner that base weave was plain fabric (one-sided mat), and the warp conductive yarns were disposed by dobby weave in a ratio of every 24 yarns of base warps (pitch 5 mm) in skipping over 2 yarns in the obverse side, and one yarn in the reverse side. The weave was made in such manner that the weft conductive yarns were inserted in a ratio of every 11 yarns of base wefts in weft double weave (pitch 5 mm), and disposed on the base weft in skipping over 3 yarns in the obverse side, and one yarn in the reverse side. In this way, a gray fabric of 141 yarns/2.54 cm in warp density and 152 yarns/2.54 cm in weft density was produced. This gray fabric was refined, dyed and finished according to the common method to obtain a fabric of 150 yarns/2.54 cm in finish warp density and 159 yarns/2.54 cm in weft density. The fabric obtained was sewn by a sewing machine, and the surface electric resistance of sewn part was measured. Various data are shown in Table 1.

(Example 6)

Using two-ply yarn of polyester melt adhesive fiber (84 decitex, 36 filaments) as a warp forming base weave and polyester false twist yarn (84 decitex, 36 filament) as a weft, and as a warp conductive yarn and a weft conductive yarn, a conductive yarn (56 decitex, 6 filaments) composed of surface exposing type yarn was used. The weave was made in such manner that base weave was plain fabric (one-sided mat), and the warp conductive yarns were disposed by dobby weave in a ratio of every 72 yarns of base warps (pitch 15 mm) in skipping over 2 yarns in the obverse side, and one yarn in the reverse side. The weave was made in such manner that the weft conductive yarns were inserted in a ratio of every 33 yarns of base wefts in weft double weave (pitch 15 mm), and disposed on the base weft in skipping over 3 yarns in the obverse side, and one yarn in the reverse side. In this way, a gray fabric of 140 yarns/2.54 cm in warp density and 153 yarns/2.54 cm in weft density was produced. This gray fabric was refined, dyed and finished according to the common method to obtain a fabric of 150 yarns/2.54 cm in finish warp density and 160 yarns/2.54 cm in weft density. The fabric obtained was sewn by a sewing machine, and the surface electric resistance of sewn part was measured. Various data are shown in Table 1.

(Example 7)

Using two-ply yarn of polyester melt adhesive fiber (84 decitex, 36 filaments) as a warp forming base weave and polyester false twist yarn (84 decitex, 36 filament) as a weft, and as a warp conductive yarn and a weft conductive yarn, a conductive yarn (56 decitex, 6 filaments) composed of surface exposing type yarn was used. The weave was made in such manner that base weave was plain fabric (one-sided mat), and the warp conductive yarns were disposed by dobby weave in a ratio of every 120 yarns of base warps (pitch 25 mm) in skipping over 2 yarns in the obverse side, and one yarn in the reverse side. The weave was made in such manner that the weft conductive yarns were inserted in a ratio of every 55 yarns of base wefts in weft double weave (pitch 25 mm), and disposed on the base weft in skipping over 3 yarns in the obverse side, and one yarn in the reverse side. In this way, a gray fabric of 141 yarns/2.54 cm in warp density and 152 yarns/2.54 cm in weft density was produced. This gray fabric was refined, dyed and finished according to the common method to obtain a fabric of 149 yarns/2.54 cm in finish warp density and 162 yarns/2.54 cm in weft density. The fabric obtained was sewn by a sewing machine, and the surface electric resistance of sewn part was measured. Various data are shown in Table 1.

(Example 8)

It was carried out in the same conditions as Example 1 except that only conductive yarn was changed. Namely, as the conductive yarn, there was used a double twisted yarn (140 decitex, 45 filaments) of polyester false twist yarn (56 decitex, 36 filaments) with surface exposing type conductive yarn (84 decitex, 9 filaments). The fabric obtained was sewn by a sewing machine, and the surface electric resistance of sewn part was measured. Various data are shown in Table 1.

(Comparative Example 1)

Using polyester false twist yarn (167 decitex, 48 filaments) as a warp forming base weave and polyester false twist yarn (334 decitex, 96 filaments) as a weft, and as a warp conductive yarn and a weft conductive yarn, there was used a double twisted yarn (89 decitex, 18 filaments) of polyester false twist yarn (33 decitex, 12 filaments) with surface exposing type conductive yarn (56 decitex, 6 filaments). The weave was made in such manner that base weave was plain fabric, and the warp conductive yarns were disposed by dobby weave in a ratio of every 16 yarns of base warps (pitch 5 mm) in skipping over 2 yarns in the obverse side, and one yarn in the reverse side. The weave was made in such manner that the weft conductive yarns were disposed also by dobby weave in a ratio of every 10 yarns of base wefts (pitch 5 mm) in skipping over 2 yarns in the obverse side, and one yarn in the reverse side. In this way, a gray fabric of 85 yarns/2.54 cm in warp density and 54 yarns/2.54 cm in weft density was produced. This gray fabric was refined, dyed and finished according to the common method to obtain a fabric of 92 yarns/2.54 cm in finish warp density and 58 yarns/2.54 cm in weft density. The fabric obtained was sewn by a sewing machine, and the surface electric resistance of sewn part was measured. Various data are shown in Table 1.

(Comparative Example 2)

Using two-ply yarn of polyester false twist yarn (84 decitex, 36 filaments) as a warp forming base weave and polyester false twist yarn (334 decitex, 96 filaments) as a weft, and as a warp conductive yarn and a weft conductive yarn, a conductive yarn (84 decitex, 9 filaments) composed of surface exposing type yarn was used. The weave was made in such manner that base weave was plain fabric (one-sided mat), and the warp conductive yarns were disposed by dobby weave in a ratio of every 32 yarns of base warps (pitch 5 mm) in skipping over one yarn in the obverse side, and three yarns in the reverse side. The weave was made in such manner that the weft conductive yarns were inserted in a ratio of every 15 yarns of base wefts in weft double weave (pitch 5 mm), and disposed on the base weft in skipping over 6 yarns in the obverse side, and 2 yarns in the reverse side. In this way, a gray fabric of 202 yarns/2.54 cm in warp density and 74 yarns/2.54 cm in weft density was produced. This gray fabric was refined, dyed and finished according to the common method to obtain a fabric of 208 yarns/2.54 cm in finish warp density and 85 yarns/2.54 cm in weft density. The fabric obtained was sewn by a sewing machine, and the surface electric resistance of sewn part was measured. Various data are shown in Table 1.

(Comparative Example 3)

Using two-ply yarn of polyester false twist yarn (84 decitex, 36 filaments) as a warp forming base weave and polyester false twist yarn (84 decitex, 96 filaments) as a weft, and as a warp conductive yarn and a weft conductive yarn, there was used a double twisted yarn (89 decitex, 18 filaments) of polyester false twist yarn (33 decitex, 12 filaments) with surface exposing type conductive yarn (56 decitex, 6 filaments). The weave was made in such manner that base weave was plain fabric (one-sided mat), and the warp conductive yarns were disposed by dobby weave in a ratio of every 32 yarns of base warps (pitch 5 mm) in skipping over 2 yarns in the obverse side, and one yarn in the reverse side. The weave was made in such manner that the weft conductive yarns were inserted in a ratio of every 28 yarns of base wefts in weft double weave (pitch 5 mm), and disposed on the base weft in skipping over 6 yarns in the obverse side, and 2 yarns in the reverse side. In this way, a gray fabric of 202 yarns/2.54 cm in warp density and 152 yarns/2.54 cm in weft density was produced. This gray fabric was refined, dyed and finished according to the common method to obtain a fabric of 212 yarns/2.54 cm in finish warp density and 164 yarns/2.54 cm in weft density.

However, regarding the conductive yarn inserted in weft double weave, the total finess is larger than the total finess of weft base yarn (D1 > D2), thus, an embodiment that the conductive yarn was buried partially in the base yarn (embodiment of not being float yarn) was formed, and the exposing conductive yarn ratio was 30%. The fabric obtained was sewn by a sewing machine, and the surface electric resistance of sewn part was measured. Various data are shown in Table 1.

(Comparative Example 4)

Using two-ply yarn of polyester melt adhesive fiber (84 decitex, 36 filaments) as a warp forming base weave and polyester false twist yarn (84 decitex, 36 filaments) as a weft, and as a warp conductive yarn and a weft conductive yarn, there was used a double twisted yarn (84 decitex, 39 filaments) of polyester false twist yarn (56 decitex, 36 filaments) with surface exposing type conductive yarn (28 decitex, 3 filaments). The weave was made in such manner that base weave was plain fabric (one-sided mat), and the warp conductive yarns were disposed by dobby weave in a ratio of every 24 yarns of base warps (pitch 5 mm) in skipping over 2 yarns in the obverse side, and one yarn in the reverse side. The weave was made in such manner that the weft conductive yarns were inserted in a ratio of every 11 yarns of base wefts in weft double weave (pitch 5 mm), and disposed on the base weft in skipping over 3 yarns in the obverse side, and one yarn in the reverse side. In this way, a gray fabric of 141 yarns/2.54 cm in warp density and 152 yarns/2.54 cm in weft density was produced. This gray fabric was refined, dyed and finished according to the common method to obtain a fabric of 150 yarns/2.54 cm in finish warp density and 158 yarns/2.54 cm in weft density. The fabric obtained was sewn by a sewing machine, and the surface electric resistance of sewn part was measured. Various data are shown in Table 1.

Table 1

| | Surface electric resistance ($\Omega$) | Total finess of double weave part (dtex) | | Exposing conductive yarn ratio in double weave part (arithmetic average: %) | Contact raito of intersecting conductive yarn (arithmetic average: %) |
|---|---|---|---|---|---|
| | | D1 (Conductive yarn) | D2 (Nonconductive yarn) | | |
| Example 1 | $3.7 \times 10^7$ | 84 | 334 | 76 | 67 |
| Example 2 | $1.1 \times 10^8$ | 89 | 334 | 76 | 67 |
| Example 3 | $6.8 \times 10^7$ | 84 | 334 | 76 | 75 |
| Example 4 | $8.7 \times 10^8$ | 84 | 334 | 52 | 50 |
| Example 5 | $2.3 \times 10^8$ | 56 | 84 | 76 | 67 |
| Example 6 | $1.5 \times 10^{10}$ | 56 | 84 | 76 | 67 |
| Example 7 | $3.9 \times 10^{10}$ | 56 | 84 | 76 | 67 |
| Example 8 | $6.2 \times 10^{11}$ | 140 | 334 | 76 | 67 |
| Comparative example 1 | $1.0 \times 10^{13}$ | No double weave | No double weave | No double weave | 50 |
| Comparative example 2 | $2.3 \times 10^{12}$ | 84 | 334 | 76 | 25 |
| Comparative example 3 | $5.3 \times 10^{12}$ | 89 | 84 | 30 | 67 |

(continued)

| | Surface electric resistance ($\Omega$) | Total finess of double weave part (dtex) | | Exposing conductive yarn ratio in double weave part (arithmetic average: %) | Contact raito of intersecting conductive yarn (arithmetic average: %) |
|---|---|---|---|---|---|
| | | D1 (Conductive yarn) | D2 (Nonconductive yarn) | | |
| Comparative example 4 | $1.6 \times 10^{12}$ | 84 | 84 | 48 | 67 |

INDUSTRIAL APPLICABILITY

The fabric of the present invention can provide a sewn product excellent in durability of antistatic property. As a result, such fabric can be suitably used in clothes such as uniform, cap, dust-proof clothing, and other application for prevention of static charge.

**Claims**

1.  A fabric, where conductive yarns are inserted each in the warp direction and the weft direction and disposed in a lattice at intervals, wherein at least either one of conductive yarns in the warp direction or the weft direction is inserted as double weave to be a float yarn, on the surface that the conductive yarn becomes a float yarn in the double weave, a ratio of the conductive yarn inserted as the double weave not covered by the orthogonal nonconductive yarn but exposed (exposing conductive yarn ratio in double weave part) is not less than 50% in arithmetic average, and a ratio that the conductive yarns in the warp direction and the weft direction intersect and contact each other (conductive yarn intersect contact ratio) is not less than 40% in arithmetic average.

2.  The fabric described in claim 1, wherein base weave comprises a nonconductive yarn, the total yarn finess D1 of conductive yarn inserted as the double weave and the total yarn finess D2 of nonconductive yarn forming the base weave in the same direction satisfy the following relationship:
    D1 < D2 [D1: the total yarn finess of conductive yarn inserted as the double weave (dtex), D2: the total yarn finess of nonconductive yarn forming the base weave in the same direction as the conductive yarn inserted as the double weave (dtex)]

3.  The fabric described in claim 1 or 2, wherein pitch of conductive yarn disposed in a lattice at intervals is in a range of 1 to 20 mm both in the warp direction and the weft direction.

4.  The fabric described in any one of claim 1 to 3, wherein surface electric resistance (R) between two points separated by 30 cm across at least one seam, when measured by a method described in IEC (International Electrotechnical Commission) 61340-5-1, 5-2 (under the environment of 23°C and 25% RH), satisfies the following formula:

$$R \leq 1.0 \times 10^{12}\ \Omega$$

5.  The fabric described in any one of claim 1 to 4, wherein a monofilament composing the conductive yarn has a circular cross section or an irregular cross section having a convex part, and conductive component is exposed in at least 3 places in the circumferential direction of the outer circumferential surface and continuously in the longitudinal direction.

6.  Clothes, using the fabric described in any one of claim 1 to 5, wherein the surface that the conductive yarn is inserted as the double weave to be a float yarn is the obverse side of clothes.

Fig.1

EP 2 284 307 A1

Fig. 2

(a)

(b)

EP 2 284 307 A1

Fig. 3

EP 2 284 307 A1

Fig. 4

EP 2 284 307 A1

## INTERNATIONAL SEARCH REPORT

| | |
|---|---|
| International application No. |
| PCT/JP2008/073597 |

| A. CLASSIFICATION OF SUBJECT MATTER |
|---|
| D03D15/00(2006.01)i, A41D13/00(2006.01)i, D03D11/00(2006.01)i |

According to International Patent Classification (IPC) or to both national classification and IPC

| B. FIELDS SEARCHED |
|---|
| Minimum documentation searched (classification system followed by classification symbols) |
| D03D1/00-27/18, A41D13/00, A41D13/008, A41D31/00 |

| Documentation searched other than minimum documentation to the extent that such documents are included in the fields searched |
|---|
| Jitsuyo Shinan Koho          1922-1996    Jitsuyo Shinan Toroku Koho    1996-2009 |
| Kokai Jitsuyo Shinan Koho    1971-2009    Toroku Jitsuyo Shinan Koho    1994-2009 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 3880743 B2  (Seiren Co., Ltd.),<br>14 February, 2007 (14.02.07),<br>Claims<br>& US 6432850 B1<br>Claims<br>& US 2003/0054719 A1 | 1-6 |
| A | JP 2000-119932 A  (Teijin Ltd.),<br>25 April, 2000 (25.04.00),<br>Claims<br>(Family: none) | 1-6 |
| A | JP 2008-1996 A  (Asahi Kasei Fibers Corp.),<br>10 January, 2008 (10.01.08),<br>Claims<br>(Family: none) | 1-6 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 04 March, 2009 (04.03.09) | 17 March, 2009 (17.03.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2008/073597

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2005-525481 A  (Sarnoff Corp.),<br>25 August, 2005 (25.08.05),<br>Claims<br>& WO 2003/095729 A1<br>Claims<br>& JP 2005-524783 A       & US 2003/0211797 A1<br>& US 2004/0009729 A1    & US 2005/0081944 A1<br>& US 2007/0049147 A1    & EP 1503665 A<br>& EP 1507906 A          & WO 2003/094719 A1<br>& KR 10-2005-0046656 A  & CN 1649539 A<br>& CN 1650057 A | 1-6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001073207 A

- JP 3880743 B